# EUROPÄISCHE PATENTSCHRIFT

(11) **EP 3 794 928 B1**
(45) Veröffentlichungstag und Bekanntmachung des Hinweises auf die Patenterteilung: **06.09.2023**
(21) Anmeldenummer: 20186189.5
(22) Anmeldetag: 16.07.2020
(51) Int. Cl.: A01D 41/127, A01D 75/28

(54) **REINIGUNGSEINRICHTUNG AN EINEM MÄHDRESCHER**
CLEANING DEVICE ON A COMBINE HARVESTER
DISPOSITIF DE NETTOYAGE SUR UNE MOISSONNEUSE-BATTEUSE

(30) Priorität: 23.09.2019 DE 102019125500
(43) Veröffentlichungstag der Anmeldung: 24.03.2021
(73) Patentinhaber: CLAAS Selbstfahrende Erntemaschinen GmbH, 33428 Harsewinkel (DE)
(72) Erfinder: Pölling, Benedikt, 48653 Coesfeld (DE); Strieker, Norbert, 33415 Verl (DE); Lutterbeck, Dennis, 48291 Telgte (DE); Baumgarten, Joachim, 48361 Beelen (DE)
(74) Vertreter: CLAAS Gruppe

(56) Entgegenhaltungen:
- EP-A1- 2 510 777
- EP-B1- 1 595 435
- DE-A1-102004 023 767
- DE-A1-102013 107 169

## Beschreibung

Die Erfindung betrifft ein Verfahren und einen Mähdrescher mit einer Vorrichtung zur Abscheidung eines Erntegutstroms auf wenigstens einem Förder- und Reinigungsorgan des Mähdreschers nach den Oberbegriffen der Ansprüche 1 und 9.

Bei Mähdreschern besteht das Problem, dass das Erntegut beim Drusch am Hang die Förder- und Reinigungsorgane einseitig belastet, weil das Erntegut bei der Seitenneigung der Maschine auf eine Seite der Förder- und Reinigungsorgane rutscht. Hierdurch ist der Reinigungseffekt wegen der einseitigen haufenförmigen Ansammlung von Erntegut gering. Aus der EP 1 595 435 B1 ist ein Verfahren sowie eine Vorrichtung zur Lösung des Problems bekannt geworden. Bei dem Verfahren sowie der Vorrichtung wird das Förder- und Reinigungsorgan von wenigstens einem Schwingantrieb zu einer Längsschwingung und zu einer Querschwingung angeregt. Hierbei wird die Querschwingung zunächst in Abhängigkeit von der Neigung des Mähdreschers vorgeregelt und anschließend in Abhängigkeit von den über die breite der Siebe des Förder- und Reinigungsorgans quer zur Fahrtrichtung gemessenen Körnerströmen feingeregelt. Die Querschwingung fördert das Erntegut quer zur Fahrtrichtung des Mähdreschers, um eine gleichmäßige Verteilung des Ernteguts auf dem Förder- und Reinigungsorgan zu erreichen.

Der Erfindung liegt das Problem zugrunde, dass die Querschwingung dazu führt, dass sich längliche Nichtkornbestandteile, wie beispielsweise Spreu, längsseitig zu den Sieblamellen der Siebe des Förder- und Reinigungsorgans ausrichten und ungestört hindurchfallen. Dementsprechend resultiert aus der Querschwingung eine Verringerung der Kornreinheit eines Haupterntegutstroms durch das Vorhandensein einer erhöhten Menge an Nichtkornbestandteilen. Mit einer Erhöhung der durch die Querschwingung verursachten Förderung des Ernteguts quer zur Fahrtrichtung erhöht sich somit ebenfalls der Anteil der Nichtkornbestandteile des Haupterntegutstroms.

Es ist deshalb Aufgabe der Erfindung, die beschriebenen Nachteile des Standes der Technik zu vermeiden und insbesondere Querschwingungen zu vermeiden, die zu einer zu großen und unerwünschten Menge an Nichtkornbestandteilen des Haupterntegutstroms führen.

Diese Aufgabe wird erfindungsgemäß durch die kennzeichnenden Merkmale der Ansprüche 1 und 9 gelöst. Weitere vorteilhafte Wirkungen des Erfindungsgenstandes ergeben sich aus den Unteransprüchen.

Gemäß dem Anspruch 1 wird ein Verfahren zur Abscheidung eines Erntegutstroms auf wenigstens einem Förder- und Reinigungsorgan, insbesondere einem Obersieb, eines Mähdreschers, vorgeschlagen, wobei das Förder- und Reinigungsorgan zu einer Längsschwingung und einer Querschwingung angeregt wird, wobei eine Regelung der Querschwingung in Abhängigkeit zumindest eines Zustands erfolgt, wobei zumindest ein Zustand zur Regelung der Querschwingung die Neigung des Mähdreschers ist. Erfindungsgemäß ist vorgesehen, dass zumindest ein weiterer Zustand zur Regelung der Querschwingung die Kornreinheit, insbesondere die Kornreinheit eines Haupterntegutstroms, ist, wobei die Querschwingung in Abhängigkeit von der Neigung des Mähdreschers vorgeregelt und in Abhängigkeit von der Kornreinheit feingeregelt wird. Hierdurch wird bei einer zu niedrigen Kornreinheit die Querschwingung des Obersiebs reduziert, so dass sich weniger Nichtkornbestandteile durch die Querschwingung längsseitig zu den Sieblamellen ausrichten. Weiterhin kann bei einer ermittelten hohen Kornreinheit die Querschwingung ebenfalls zusätzlich erhöht werden, um schneller die gewünschte Verteilung des Ernteguts auf dem Obersieb zu erlangen.

In einer vorteilhaften Ausgestaltung wird die Kornreinheit durch einen oder mehrere erste Sensoren, vorzugsweise optische Sensoren, ermittelt. Optische Sensoren sind besonders gut geeignet, um mittels Bildanalyse die Kornreinheit zu ermitteln.

Insbesondere kann das Förder- und Reinigungsorgan sowohl bei einem Arbeitsvorgang in der Ebene sowie am Hang mit einer aktiven Querschwingung beaufschlagt werden, wobei die zurückgelegte Strecke des Ernteguts auf dem Förder- und Reinigungsorgan aktiv verlängert wird. Eine aktive Verlängerung der zurückgelegten Strecke des Ernteguts auf dem Förder- und Reinigungsorgan ist besonders Vorteilhaft, da sich hierdurch eine verlängerte Strecke für den Abscheideprozess ergibt. Eine aus einer aktiven Querschwingung hervorgerufene alternierende Querförderrichtung führt beispielsweise bei einem Erntevorgang in der Ebene zu einer aktiven Verlängerung der auf dem Förder- und Reinigungsorgan zurückgelegten Strecke des Ernteguts, gegenüber einer ausschließlich in Fahrtrichtung gerichteten Förderung des Ernteguts.

In einer vorteilhaften Ausgestaltung kann zumindest ein weiterer Zustand zur Regelung der Querschwingung eine Querabscheidung, insbesondere eine Querabscheidung an einem oder an mehreren Sieben des Förder- und Reinigungsorgans, sein. Mittels der Querabscheidung kann die Querschwingung derart geregelt werden, sodass eine gewünschte Verteilung des Ernteguts, insbesondere eine gleichmäßige Verteilung, auf dem Förder- und Reinigungsorgan erreicht werden kann.

Bevorzugt kann die Querabscheidung am Abgang an einem oder an mehreren Sieben des Förder- und Reinigungsorgans durch eine oder mehrere Körnerstrommesseinrichtungen bestimmt werden. Eine Bestimmung der Querabscheidung am Abgang der Siebe ist besonders Vorteilhaft, da sich hier bereits eine aus der Querschwingung resultierende Verteilung des Ernteguts gebildet hat.

Eine vorteilhafte Weiterbildung sieht vor, dass der Mähdrescher als Axialrotormaschine ausgebildet ist, wobei die Axialrotormaschine zumindest einen Axialrotor und diesen zumindest teilweise umschließende Lamellen aufweist, wobei ein weiterer Zustand zur Regelung der Querabscheidung eine Anstellung der Lamellen ist, wobei die Anstellung der Lamellen durch die Regelung in Abhängigkeit wenigstens eines weiteren Zustands verändert wird. Dies ist besonders Vorteilhaft, da durch die Anstellung der Lamellen das Erntegut bereits vor einem Erreichen des Förder- und Reinigungsorgans strategisch sinnvoll platziert werden kann, um eine bessere Ausgangslage für das Verfahren zu schaffen. Beispielsweise ermöglicht dies für die aktive Verlängerung der auf dem Förder- und Reinigungsorgan zurückgelegten Strecke des Ernteguts selbiges bevorzugt in Richtung eines bestimmten Bereichs des Förder- und Reinigungsorgans zu leiten, welcher als Ausgangslage für die aktive Verlängerung gut geeignet ist.

In einer besonders vorteilhaften Weiterbildung erfolgt die Regelung der Querschwingung automatisch, sodass ein Eingreifen des Fahrers in die Regelung nicht erforderlich ist.

Vorteilhaft ist es, wenn ein weiterer Zustand zur Regelung der Querschwingung der Durchsatz des Erntegutstroms ist. Mittels des Durchsatzes des Erntegutstroms lässt sich das Förder- und Reinigungsorgan bedarfsweise mit der Querschwingung beaufschlagen, so dass die Beaufschlagung mit der Querschwingung lediglich erfolgt, wenn sich Erntegut auf dem Förder- und Reinigungsorgan befindet. Verschleiß und Energieverbrauch können somit reduziert werden.

Der erfindungsgemäße Mähdrescher umfasst einen oder mehrere erste Sensoren zur Ermittlung der Kornreinheit und eine Steuereinheit zum Steuern der Querschwingung, wobei die Steuerung die Querschwingung in Abhängigkeit zumindest eines Zustands regelt, wobei zumindest ein Zustand zur Steuerung der Querschwingung die Neigung des Mähdreschers und zumindest ein weiterer Zustand die Kornreinheit ist, wobei die Steuereinheit in Abhängigkeit von der Neigung des Mähdreschers auf einen Querschwingungs-Sollwert voreingestellt und anschließend in Abhängigkeit von dem zumindest einen weiteren Zustand, insbesondere der Kornreinheit, ein Steuerbefehlssignal generiert mit dem die Querschwingung des Förder- und Reinigungsorgans eingestellt wird, so dass die Kornreinheit innerhalb eines definierten Toleranzbereichs liegt.

Vorteilhafterweise sind die ersten Sensoren als optische Sensoren zur Aufnahme von Bildserien eines durchlaufenden Erntegutstroms ausgebildet, wobei vorzugsweise die optischen Sensoren im Kornelevator angeordnet sind, da durch diesen das an dem Förder- und Reinigungsorgan abgeschiedene Erntegut gefördert wird und somit eine derartige Anordnung besonders gut für die Messung der Kornreinheit geeignet ist.

In einer vorteilhaften Ausgestaltung umfasst der Mähdrescher wenigstens eine Körnerstrommesseinrichtung zur Bestimmung der Querabscheidung, wobei zumindest ein weiterer Zustand zur Steuerung der Querschwingung die Querabscheidung ist. Die Ermittlung der Querabscheidung ist besonders vorteilhaft, da diese ein Maß für die Verteilung des Ernteguts auf dem Förder- und Reinigungsorgan ist, welche die Abscheidung des Ernteguts am Förder- und Reinigungsorgan wesentlich beeinflusst.

In einer besonders vorteilhaften Weiterbildung kann der Mähdrescher als Axialrotormaschine ausgebildet sein, wobei die Axialrotormaschine zumindest einen Axialrotor und diesen zumindest teilweise umschließende Lamellen aufweist und zumindest ein weiterer Zustand zur Steuerung der Querschwingung eine Anstellung der Lamellen ist. Insbesondere kann die Steuereinheit zum Steuern der Anstellung der Lamellen eingerichtet sein und die Steuerung die Anstellung der Lamellen in Abhängigkeit zumindest eines der Zustände verändert. Eine Steuerung der Anstellung der Lamellen bietet den Vorteil, dass das Erntegut bereits vor erreichen des Förder- und Reinigungsorgans für eine optimale Abscheidung am Förder- und Reinigungsorgan in eine entsprechend hierfür besonders gut geeignete Richtung geleitet werden kann.

In einer vorteilhaften Ausgestaltung kann der Mähdrescher eine Durchsatzmesseinrichtung aufweisen, insbesondere eine in einem Schrägförderer des Mähdreschers angeordnete Schichthöhenwalze, zur Ermittlung des Durchsatzes des Erntegutstroms, wobei zumindest ein weiterer Zustand zur Steuerung der Querschwingung (Q) der Durchsatz des Erntegutstroms ist, um eine Beaufschlagung des Förder- und Reinigungsorgans mit der Querschwingung lediglich durchzuführen, wenn Erntegut auf dem Förder- und Reinigungsorgan vorhanden ist.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Fig. 1: eine schematische Seitenansicht eines Mähdreschers;
- Fig. 2: eine schematische Schnittansicht eines Axialrotors;
- Fig. 3: ein schematischer Ausschnitt einer Heckansicht eines Mähdreschers mit dem Obersieb;
- Fig. 4: ein schematischer Programmablaufplan zur Veranschaulichung der Regelung;
- Fig. 5a: eine schematische Ansicht des Obersiebs zur Veranschaulichung einer ersten Variante der vom Erntegut auf dem Obersieb zurückgelegten Strecke;
- Fig. 5b: eine schematische Ansicht des Obersiebs zur Veranschaulichung einer zweiten Variante der vom Erntegut auf dem Obersieb zurückgelegten Strecke;

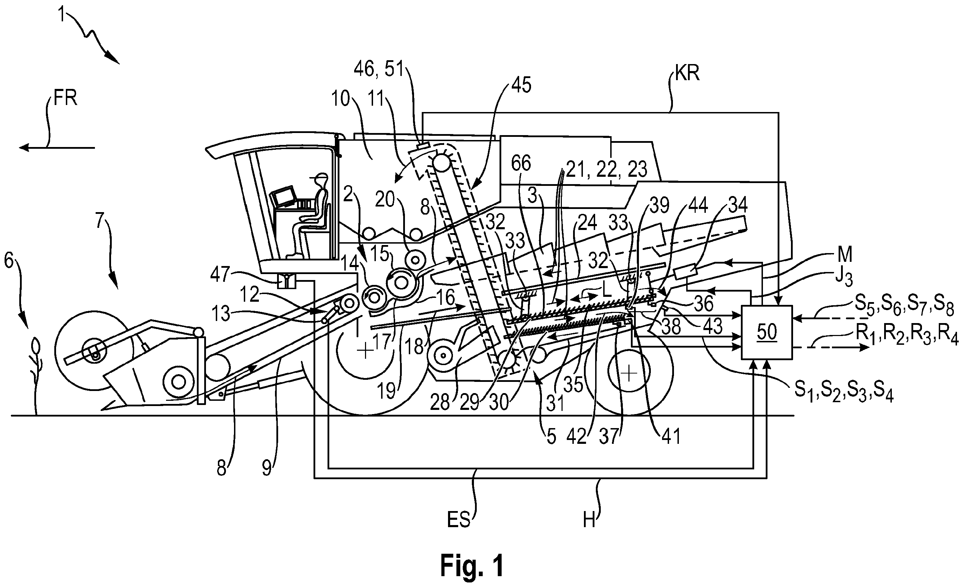

Bei dem in Figur 1 gezeigten Ausführungsbeispiel der Erfindung handelt es sich um einen selbstfahrenden Mähdrescher 1 mit einem sog. Tangentialdreschwerk 2 und einem nachgeordneten Hordenschüttler 3, wobei der Mähdrescher 1 anstatt eines Hordenschüttlers 3 ebenfalls mit einem Axialrotor 4 ausgestattet sein kann. Unterhalb des Hordenschüttlers 3 befindet sich eine Förder- und Reinigungseinrichtung 5.

Die Arbeitsweise eines solchen Mähdreschers 1 wird nachfolgend beschrieben. Das Erntegut 6 wird zunächst von einem Schneidwerk 7 aufgenommen. Das aufgenommene Erntegut 6 bildet einen Erntegutstrom 8, welcher vom Schneidwerk 7 an einem Schrägförderer 9 übergeben wird.

Unter dem Begriff des "Erntegutstroms 8" des Mähdreschers 1 ist vorliegend der Strom des verarbeiteten Ernteguts 6 auf dem Ernteguttransportweg des Mähdreschers 1 zu verstehen. Der Ernteguttransportweg beginnt speziell bei dem Mähdrescher 1 bei dem Schneidwerk 7 und führt jedenfalls bis zum Korntank 10 des Mähdreschers 1. Der Begriff des "Haupterntegutstroms 11" bezeichnet nun denjenigen Teil des Erntegutstroms 8, welcher den überwiegenden Teil des geernteten Guts, bezogen auf den gesamten Ernteguttransportweg, bildet.

Im Schrägförderer 9 ist eine Durchsatzmesseinrichtung 12 angeordnet, welche eine beispielsweise aus der DE 10 2014 102 789 A1 an sich bekannte und daher hier nicht näher beschriebene Schichthöhenwalze 13 aufweisen kann, mittels der der Durchsatz des Erntegutstroms 8 ermittelt wird.

Der Schrägförderer 9 übergibt das Erntegut 6 in seinem rückwärtigen Bereich an die Dreschorgane 14, 15, 16 des Tangentialdreschwerks 2.

Am Eingang des Tangentialdreschwerks 2 befindet sich eine Vorbeschleunigungstrommel 14, der in Gutflussrichtung eine Dreschtrommel 15 nachgeordnet ist. Untenseitig werden die Vorbeschleunigungstrommel 14 und die Dreschtrommel 15 wenigstens teilweise von einem Dreschkorb 16 ummantelt.

Das aus dem Schrägförderer 9 austretende Erntegut 6 wird durch die Vorbeschleunigungstrommel 14 erfasst und weiter von der Dreschtrommel 15 durch den zwischen der Dreschtrommel 15 und dem Dreschkorb ausgebildeten Dreschspalt 17 gezogen. Dabei bearbeitet die Dreschtrommel 15 das Erntegut 6 mechanisch in dessen Folge ein Korn-Spreu-Gemisch 18 am Dreschkorb 16 abgeschieden und über einen schwingend angetriebenen Vorbereitungsboden 19 der Reinigungseinrichtung 5 zugeführt wird, um die Körner von den Nichtkornbestandteilen, d. h. von Halm- und Spreuteilen, zu trennen. Vom Dreschwerk 2 gelangt der im Wesentlichen aus ausgedroschenen Halmen bestehende Erntegutstrom 8 über die entgegen dem Uhrzeigersinn rotierende Wendetrommel 20 auf den Hordenschüttler 3, der den Erntegutstrom 8 in den rückwärtigen Bereich des Mähdreschers 1 fördert. Dabei werden die noch im Erntegutstrom 8 befindlichen Körner 21 sowie eventuell Kurzstroh 22 und Spreu 16 abgetrennt, indem sie durch den Hordenschüttler 3 hindurch auf einen Rücklaufboden 24 fallen.

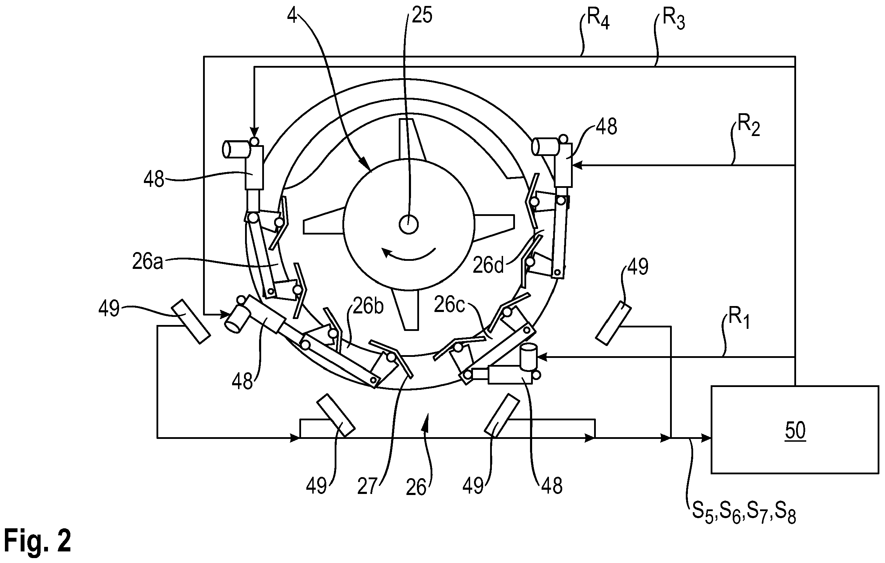

Im Falle eines mit einem Axialrotor 4, der beispielsweise aus der EP 1 479 280 A1 bekannt ist, ausgestatteten Mähdreschers 1, gelangt das Erntegut 6 über die Wendetrommel 20 zu dem Axialrotor 4, der in diesem Fall den Erntegutstrom 8 in den rückwärtigen Bereich des Mähdreschers 1 fördert. Ein beispielhafter und an sich bekannter Axialrotor 4 ist in Fig. 2 dargestellt. Einzelheiten bezüglich der Struktur des Axialrotors 4 sind detailliert in der EP 1 479 280 A1 beschrieben, sodass im Folgenden die Struktur nicht nochmals detailliert beschrieben wird. Der Axialrotor 4 ist von einer Abscheidefläche 26 teilweise ummantelt, welche sich aus einer Mehrzahl von in Umfangsrichtung gestaffelter Lamellen 27 zusammensetzt. Die Lamellen 27 sind jeweils um eine zur Längsachse 25 des Axialrotors 4 parallele Achse schwenkbar. In der in Fig. 2 dargestellten Ausführung sind die Lamellen 27 zu vier jeweils durch einen gemeinsamen Linearaktor 48 gesteuerten Gruppen zusammengefasst. D.h. die Abscheidefläche 26 ist quer zur Förderrichtung in vier jeweils einer Gruppe der Lamellen 27 entsprechende Abschnitte 26a, 26b, 26c, 26d unterteilt, deren Durchlässigkeit durch Schwenken der Lamellen 27 individuell einstellbar ist. Um die Abscheidefläche 26 sind Kornsensoren 49 jeweils so angeordnet, dass diese von an einem der Abschnitte 26a-26d austretende Körner 21 getroffen werden. Eine mit den Kornsensoren 49 verbundene Steuereinheit 50 ermittelt aus den Körnerstromsignalen S5, S6, S7, S8 der Kornsensoren 49 die an dem jeweiligen Abschnitt austretende Kornmenge. Die an der Abscheidefläche 26 abgeschiedenen Bestandteile (Körner 21, Kurzstroh 22 und Spreu 23) werden über die Lamellen 27 in Richtung des Rücklaufbodens geleitet.

Der Rücklaufboden 24 transportiert Körner 21, Kurzstroh 22 und Spreu 23 zum Vorbereitungsboden 19 und von dort gelangen diese in die Förder- Reinigungseinrichtung 5. Die Förder- und Reinigungseinrichtung 5 besteht aus einem Gebläse 28, Förder- und Reinigungsorganen 29, 30, welche ein Obersieb 29 und ein Untersieb 30 umfassen und den Körnerrücklaufboden 31.

Das Obersieb 29 ist mittels Lenkern 32, an deren Enden Kugelgelenklager 29 angeordnet sind, annähernd horizontal in alle Richtungen beweglich im Mähdrescher 1 gelagert. Über zwei schematisch dargestellte, aus der DE 199 08 696 bekannte und daher hier nicht näher erläuterte miteinander gekoppelte Schwingantriebe 34 wird das Obersieb 29 zu einer Längsschwingung L und einer quer zu dieser verlaufenden Querschwingung Q angeregt.

Alternativ ist es aber auch möglich und allgemein bekannt, dass das Obersieb 29 und Untersieb 30 gemeinsam in einem Siebkasten (nicht gezeigt) angeordnet sind und der Siebkasten inklusive des Obersiebs 29 sowie des Untersiebs 30 durch die Schwingantriebe 34 zu einer Querschwingung Q und einer Längsschwingung L angeregt wird.

Eine weitere Alternative besteht darin, lediglich einen Schwingantrieb 34 zum Anregen einer Längsschwingung L und zusätzlich eine Verschwingeinrichtung (nicht gezeigt) an dem Obersieb 29 anzuordnen, durch welche das Obersieb 29 mit einer Querschwingung Q beaufschlagt wird. Eine derartige Anordnung ist beispielsweise aus der EP 1 609 352 B1 bekannt und wird daher hier nicht näher erläutert.

Im Folgenden wird die Ausführung näher beschrieben, bei der lediglich das Obersieb 29 mit einer Querschwingung Q beaufschlagt wird.

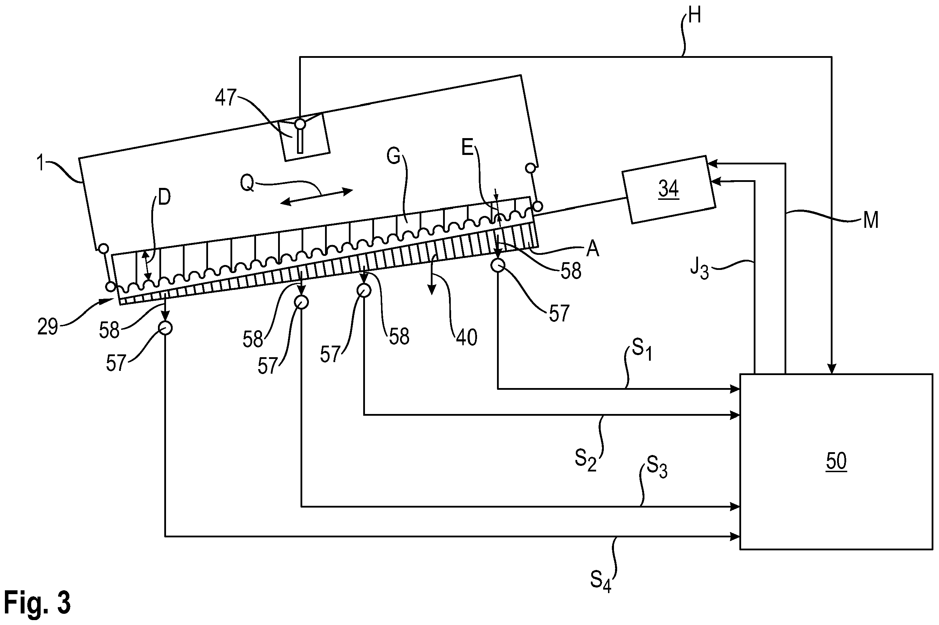

Die Längsschwingung L des Obersiebs 29 beschleunigt das auf diesem befindlichen Erntegut 6, welches im Wesentlichen aus Körnern 21, Kurzstroh 22 und Spreu 23 besteht, entgegengesetzt zur Fahrtrichtung FR des Mähdreschers 1, um diese über das Obersieb 29 in den hinteren Bereich des Mähdreschers 1 zu fördern. Die Querschwingung Q (siehe Fig. 3) beschleunigt die Körner 21, Kurzstroh 22 und Spreu 23 quer zur Fahrtrichtung FR des Mähdreschers 1, damit das bei der Hangfahrt des Mähdreschers 1 hangabwärts geglittene Erntegut 6 gleichmäßig über die Breite des Obersiebs 29 verteilt wird.

Die Abscheidung der Körner 21 vom Kurzstroh 22 und Spreu 23, erfolgt in der Weise, dass durch die Sieböffnungen 35, welche sich zwischen auf den Sieben 29, 30, angeordneten Sieblamellen 66 befinden, des Obersiebs 29 mittels des Gebläses 28 ein Luftstrom von unten nach oben hindurch gefördert wird, welcher den über das Obersieb 29 geführten Erntegutstrom 8 auflockert und für das Heraustrennen der spezifisch leichteren Spreu 23 und Kurzstrohanteile 22 sorgt, während die schweren Erntegutkörner durch die Sieböffnungen 35 fallen.

Die Abscheidung am Untersieb 30 erfolgt analog zu der Abscheidung am Obersieb 29, wobei je nach Ausgestaltung der Förder- und Reinigungsorgane das Untersieb 30 sowohl mit einer Querschwingung Q und einer Längsschwingung L oder lediglich mit einer Längsschwingung L beaufschlagt werden kann.

Das Obersieb 29 und Untersieb 30 sind teilweise übereinander angeordnet, so dass das Erntegut 21, 22, 23 in zwei Stufen unterschiedlich fein gesiebt wird, wobei die Sieböffnungen 35 des Ober- und Untersiebs 29, 30 über Stellglieder 36, 37 verstellbar sind. Das Obersieb 29 ist in der Regel so ausgeführt, dass es in seinem rückwärtigen Bereich, dem sogenannten Überkehrbereich 38, eine größere Maschenweite aufweist.

Unterhalb des Obersiebs 29 ist im Überkehrbereich 38 eine später noch näher beschriebene erste Körnerstrommesseinrichtung 39 angeordnet, um eine Querabscheidung A (siehe Fig. 3), welche die Abscheidung über die Breite des Siebes beschreibt, eines durch die Sieböffnungen 35 des Obersiebs 29 hindurchgefallenen Siebdurchgangs 40 zu bestimmen. Unterhalb der ersten Körnerstrommesseinrichtung 39 kann eine zweite Körnerstrommesseinrichtung 41 am Ende des Untersiebs 30 angeordnet sein, die eine Querabscheidung A eines über das Untersieb 30 geführten Siebüberlaufs 42 und/oder des durch die Sieböffnungen 35 des Obersiebs 29 hindurchgefallene Siebdurchgangs 40 bestimmt. Des Weiteren kann am Ende des Obersiebs 29 eine dritte Körnerstrommesseinrichtung 43 angeordnet sein, mit der die Querabscheidung A eines nicht durch das Obersieb 29 hindurchgefallenen Siebverlusts 44 bestimmt werden kann. Die Körnerstrommesseinrichtungen 39, 41, 43 sind jeweils in einem Bereich der Siebe 29, 30 angeordnet, in dem die Verteilung des Ernteguts 21, 22, 23 auf die gesamte Breite der Siebe 29, 30 bereits erfolgt ist.

Von der Förder- und Reinigungseinrichtung 5 führt ein Kornelevator 45 den Erntegutstrom 8 schließlich zum Korntank 10.

Im Kornelevator 45 ist eine optische Sensoreinrichtung 46, welche erste Sensoren 51 zur Aufnahme von Bildserien des diesen durchlaufenden Haupterntegutsroms 11 aufweist, welche zur Ermittlung eines Nichtkornanteils und/oder eines Bruchkornanteils des Haupterntegutsroms 11 basierend auf einer aufgenommenen Bildserie verwendet wird. Eine derartige optische Sensoreinrichtung 46 ist bereits detailliert in der DE 10 2013 107 169 A1 beschrieben, sodass im Folgenden die Struktur der Sensoreinrichtung 46 nicht nochmals beschrieben wird.

Mit dem Begriff "Bruchkornanteil" bzw. "Nichtkornanteil" ist der Anteil der zerbrochenen Körner von allen Körnern im Erntegutstrom 8 einerseits und der Anteil von Material im Erntegutstrom 8, welches kein Korn im Sinne des Ernteguts 6 ist, andererseits gemeint. Es kann also in den Nichtkornanteil auch Material einfließen, welches zwar eigentlich auch Korn darstellt, aber kein Korn des aktuell geernteten Ernteguts 6 ist. Dieser Bruchkorn- und/oder Nichtkornanteil kann sich auf die gerade von der Bildserie erfasste Bildfläche oder auf ein bestimmtes, soeben erfasstes Teilvolumen des Erntegutstroms beziehen. Bevorzugt ist aber, dass der Bruchkornanteil und/oder der Nichtkornanteil auf einen Durchsatz des Haupterntegutstroms 11 bezogen ist, wie er durch den Mähdrescher 1 geführt ist.

Zusätzlich ist am Mähdrescher 1 ein Querneigungssensor 47 angeordnet, der auf an sich bekannte Weise die Querneigung des Mähdreschers 1 und damit die Querneigung der Förder- und Reinigungsorgane 29, 30 sensiert.

Die Körnerstrommesseinrichtungen 39, 41, 43, die optische Sensoreinrichtung 46, die Durchsatzmesseinrichtung 12, der Querneigungssensor 47, sind neben den Kornsensoren 49 ebenfalls mit der Steuereinheit 50 verbunden, mit der die Querschwingung Q des Schwingantriebs sowie die Linearaktoren 48 zur Anstellung der Lamellen 27 auf noch näher zu beschreibender Weise geregelt werden.

Fig. 3 zeigt einen Ausschnitt einer Heckansicht des Obersiebs 29 eines Mähdreschers 1 bei der Erntefahrt am Hang. Durch die geneigte Lage des Mähdreschers 1 rutscht das auf den Sieben 29, 30 geförderte Erntegut 21, 22, 23 durch die Schwerkraft hangabwärts, was zu ungleichverteilten, in der Figur 3 schematisch dargestellten Gutverteilungen G des Ernteguts 21, 22, 23 auf den Sieben 29, 30 führt. Die ungleichmäßige Gutverteilung G bedingt im Bereich hoher Gutschichtdicke D einen geringen Abscheideefekt am Erntegut 21, 22, 23 im Vergleich zu einem Bereich mit geringer Gutschichtdicke E in dem ein hoher Abscheideefekt erzielt wird, so dass die Siebe 29, 30 nicht überall effizient arbeiten. Über die Breite der Siebe 29, 30 ergibt sich hieraus eine ungleichverteilte, in der Fig. 3 schematisch dargestellte Querabscheidung A, deren Kurvenverlauf durch die Geometrie der zugehörigen Gutverteilung G bestimmt wird. Ziel der erfindungsgemäßen Vorrichtung ist es, durch die Querschwingung Q eine gleichverteilte Gutverteilung G, das heißt jeweils eine homogene Gutschichtdicke D über die Breite des Obersiebs 29 zu erreichen, die zu einem gleich großen Abscheideefekt führt, so dass die Querabscheidung A über die Breite des Obersiebs 29 konstant ist.

Die unterhalb des Obersiebs 29 angeordnete erste Körnerstrommesseinrichtung 39 besteht aus mehreren Impulsdichtesensoren 57. Eine derartige Körnerstrommesseinrichtung 39 ist bereits in der EP 1 595 435 B1 detailliert beschrieben und wird daher hier nicht näher beschrieben. Die Impulsdichtesensoren 57 erzeugen beim Auftreffen von Körnerströmen 58 Körnerstromsignale S1, S2, S3, S4, die sich proportional zu den Körnerströmen 58 ändern.

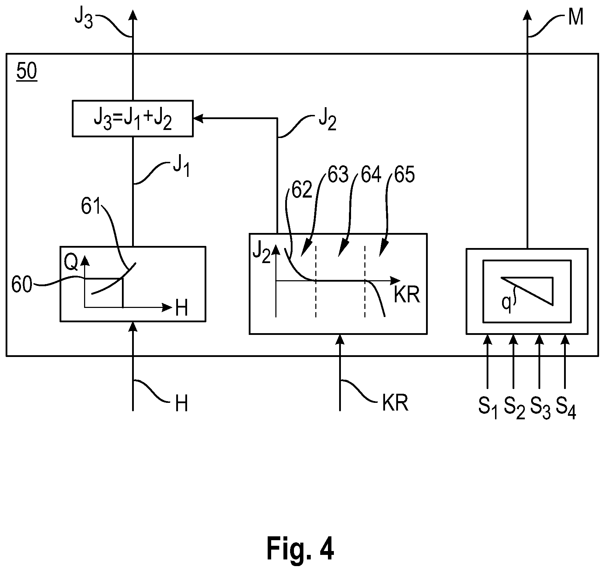

Der Querneigungssensor 47 erzeugt ein Neigungssignal H, das sich proportional zur Änderung der Neigung des Mähdreschers 1 am Hang ändert. Die von den Impulsdichtesensoren 57 erzeugten Körnerstromsignale S1, S2, S3, S4 und das von dem Querneigungssensor 47 erzeugte Neigungssignal werden an die Steuereinheit 50 übergeben. Die Steuereinheit 50 ordnet den Körnerstromsignalen S1, S2, S3, S4 eine in der Steuereinheit 50 gespeicherte erste Abscheidekurve q zu, deren Verlauf der Querabscheidung A des Obersiebs 29 entspricht (siehe Fig. 4). Die Abscheidekurven q kann beispielsweise durch empirische Versuchsreihen ermittelt worden sein und gibt den Körnerdurchsatz entlang der Breite des Obersiebs 29 an.

In Fig. 4 ist ein Ablaufplan der Regelung der Querschwingung dargestellt. Wie in dem Bereits aus der EP 1 595 435 B1 bekannten Verfahren regelt die Steuereinheit 50 die Querschwingung Q des Obersiebs 29 automatisch in Abhängigkeit von der Neigung des Mähdreschers 1 grob vor. Die Steuereinheit 50 generiert in Abhängigkeit von dem Neigungssignal H ein erstes Steuerbefehlssignal J1. Das erste Steuerbefehlssignal J1 dient dem Voreinstellen der Querschwingung Q des Obersiebs 29 auf einen Querschwingungs-Sollwert 60, der in einer ersten Kennlinie 61 in der Steuereinheit 50 gespeichert ist.

Erfindungsgemäß wird ein zweites Steuerbefehlssignal J2 zur Feinregelung der Querschwingung Q in Abhängigkeit von der an der optischen Sensoreinrichtung 46 ermittelten Kornreinheit KR, welche den Nichtkornanteil des Haupterntegutstroms 11 entspricht, generiert. Die Feinregelung erfolgt im Ausführungsbeispiel durch Addition des ersten und zweiten Steuerbefehlssignals J1, J2, wobei dessen Summe ein drittes Steuerbefehlssignal J3 ergibt. Hierfür ist in der Steuereinheit 50 eine zweite Kennlinie 62 gespeichert. Die zweite Kennlinie 62 definiert das zweite Steuerbefehlssignal J2 in Abhängigkeit von der Kornreinheit KR. Diese Abhängigkeit ist im Ausführungsbeispiel in drei Bereiche 63, 64, 65 unterteilt.

Im ersten Bereich 63, in dem eine hohe Kornreinheit KR vorliegt und dementsprechend wenig Nichtkornbestandteile im Haupterntegutstrom 11 enthalten sind, nimmt das zweite Steuerbefehlssignal J2 einen positiven Wert an. Dies liegt darin begründet, dass sich bei einer zu hohen Querschwingung Q die Nichtkornbestandteile längsseitig zu den Sieblamellen 66 des Obersiebs 29 ausrichten und ungestört hindurchfallen. Für den Fall einer hohen Kornreinheit KR ist der Anteil der Nichtkornbestandteile, die sich in Folge der Querschwingung Q längsseitig zu den Sieblamellen 66 ausrichten gering. Dementsprechend ist eine Erhöhung der Querschwingung Q, die sich aus einem positiven Wert für J2 ergibt, unproblematisch. Somit erfolgt durch den positiven Wert des zweiten Steuerbefehlssignals J2 im ersten Bereich 62 eine zusätzliche Verstärkung der Querschwingung Q.

Im zweiten Bereich 64 befindet sich die Kornreinheit KR in einem beispielsweise aus iterativen Versuchen definierten Soll-Bereich. Hier ist keine zusätzliche Änderung der Querschwingung Q in Abhängigkeit der Kornreinheit vorgesehen und somit ist der definierte Wert für J2 in diesem zweiten Bereich 64 gleich Null.

Im dritten Bereich 65 ist die Kornreinheit KR gering. Hier liegt ein hoher Anteil an Nichtkornbestandteilen im Haupterntegutstrom 11 vor. Der hohe Anteil an Nichtkornbestandteilen ist auf die bereits beschriebene Problematik der Ausrichtung der Nichtkornbestandteile längsseitig zu den Sieblamellen 66 zurückzuführen. Aus diesem Grund erfolgt durch einen negativen Wert von J2 eine zusätzliche Verringerung der Querschwingung Q.

Mit dem generierten dritten Steuerbefehlssignal J3 wird der Aktor 34 zum Beaufschlagen des Obersiebs 29 mit der Querschwingung Q angesteuert.

Anschließend regelt die Steuereinheit 50 bei annähernd konstanter Hangneigung die Querschwingung Q automatisch in Abhängigkeit von der Querabscheidung A des Obersiebs 29 nach, wobei das dritte Steuerbefehlssignal J3 übersteuert wird. Hierfür generiert die Steuereinheit 50 in Abhängigkeit von der Querabscheidung A ein viertes Steuerbefehlssignal M mit dem die Querschwingung Q derart geregelt wird, so dass die Querabscheidung A konstant ist.

In einer weiteren Ausführung des erfindungsgemäßen Verfahrens wird das vierte Steuerbefehlssignal M zur Regelung der Querschwingung Q in Abhängigkeit von der Querabscheidung A des Obersiebs 29 analog zu der Feinregelung des ersten Steuerbefehlssignals J1 ebenfalls in Abhängigkeit von der Kornreinheit KR feingeregelt. Hierbei wird das vierte Steuerbefehlssignal M bei einer zu niedrigen Kornreinheit KR reduziert, sodass sich die hierdurch erzeugte Querschwingung Q reduziert.

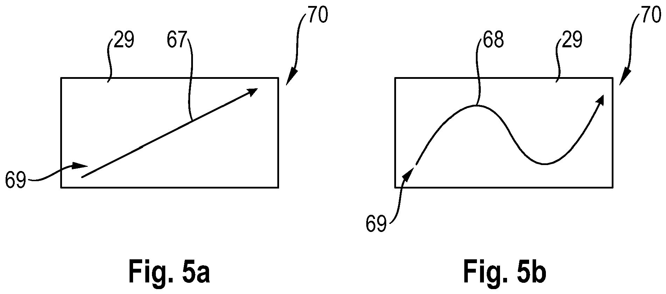

In einer weiteren Ausführung des Verfahrens, wird die Querschwingung Q derart geregelt, so dass die zurückgelegte Strecke 67, 68 des Ernteguts 21, 22, 23 auf dem Obersieb 29 aktiv verlängert wird. Hierdurch sollen mehr Körner 21 von dem Erntegut 21, 22, 23 abgeschieden werden. Fig. 5a und Fig. 5b zeigen schematisch zwei beispielhafte Verläufe der Strecke 67, 68 des Ernteguts 21, 22, 23 über das Obersieb 29. Das Erntegut 21, 22, 23 wird z. B. von einem sich in Fahrtrichtung FR befindlichen vorderen Ausgangsbereich 69 in Richtung eines diesem gegenüber liegenden hinteren Endbereichs 70 quer über das Obersieb 29 gefördert (siehe Fig. 5a). Alternative Verläufe der Strecke 67, wie beispielsweise ein in Fig. 5b gezeigter sinusförmiger Verlauf der Strecke 68, liegen ebenfalls im Rahmen des erfindungsgemäßen Verfahrens. Die Regelung dieser aktiven Verlängerung der zurückgelegten Strecke 67, 68 durch die Steuereinrichtung 50 erfolgt ebenfalls innerhalb vorher festgelegter Grenzen die die Kornreinheit KR, Hangneigung, sowie Querabscheidung A betreffen und beispielsweise aus iterativen Versuchen ermittelt worden sind.

Für den Fall eines mit einem Axialrotor 4 ausgestatteten Mähdreschers 1 (siehe Fig. 2), werden die Lamellen 27 von der Steuereinrichtung 50 derart angesteuert, so dass das Erntegut 21, 22, 23 bereits durch die jeweilige Stellung der Lamellen 27 primär in Richtung des Ausgangsbereiches 69 für die aktive Verlängerung der Strecke 67, 68 auf das Obersieb 29 gefördert wird. Hierfür werden in Abhängigkeit von den Körnerstromsignalen S5, S6, S7, S8 Steuersignale R1, R2, R3, R4 zur Ansteuerung der Linearaktoren 48 generiert.

Weiterhin ist vorgesehen, dass die Querschwingung Q des Obersiebs 29 automatisch in Abhängigkeit des Durchsatzes des Erntegutstroms 8 geregelt wird. Hierfür wird mittels der Durchsatzmesseinrichtung 12 ein Erntegutstromsignal ES generiert, anhand dessen die Steuereinrichtung 50 den Durchsatz des Erntegutstroms 8 ermittelt. Fällt der Durchsatz unter einen Grenzwert, wird die Querschwingung Q herunter geregelt oder ausgeschaltet und bei einem Überschreiten des Grenzwerts wieder aktiviert.

Sämtliche im Zusammenhang mit dem vorstehend beschriebenen Ausführungsbeispiel verwirklichten Merkmale können grundsätzlich auch unabhängig voneinander vorteilhaft wirken und sind nicht zwingend auf die hier dargelegte Merkmalskombination angewiesen, soweit die Merkmale nicht in den unabhängigen Ansprüchen kombiniert werden.

**Bezugszeichenliste:**

| | | | |
|---|---|---|---|
| 1 | Mähdrescher | 31 | Körnerrücklaufboden |
| 2 | Tangentialdreschwerk | 32 | Lenker |
| 3 | Hordenschüttler | 33 | Kugelgelenklager |
| 4 | Axialrotor | 34 | Schwingantrieb |
| 5 | Förder- und Reinigungseinrichtung | 35 | Sieböffnungen |
| 6 | Erntegut | 36 | Stellglied |
| 7 | Schneidwerk | 37 | Stellglied |
| 8 | Erntegutstrom | 38 | Überkehrbereich |
| 9 | Schrägförderer | 39 | Erste Körnerstrommesseinrichtung |
| 10 | Korntank | 40 | Siebdurchgang |
| 11 | Haupterntegutstrom | 41 | Zweite Körnerstrommesseinrichtung |
| 12 | Durchsatzmesseinrichtung | 42 | Siebüberlauf |
| 13 | Schichthöhenwalze | 43 | Dritte Körnerstrommesseinrichtung |
| 14 | Vorbeschleunigungstrommel | 44 | Siebverlust |
| 15 | Dreschtrommel | 45 | Kornelevator |
| 16 | Dreschkorb | 46 | Optische Sensoreinrichtung |
| 17 | Dreschspalt | 47 | Querneigungssensor |
| 18 | Korn- Spreu- Gemisch | 48 | Linearaktor |
| 19 | Vorbereitungsboden | 49 | Kornsensoren |
| 20 | Wendetrommel | 50 | Steuereinheit |
| 21 | Körner | 51 | Erste Sensoren |
| 22 | Kurzstroh | 57 | Impulsdichtesensoren |
| 23 | Spreu | 58 | Körnerstrom |
| 24 | Rücklaufboden | | |
| 25 | Längsachse | 60 | Querschwingungs-Sollwert |
| 26 | Abscheidefläche | 61 | Erste Kennlinie |
| 26a | Abschnitt | 62 | Zweite Kennlinie |
| 26b | Abschnitt | 63 | Erster Bereich |
| 26c | Abschnitt | 64 | Zweiter Bereich |
| 26d | Abschnitt | 65 | Dritter Bereich |
| 27 | Lamellen | 66 | Sieblamelle |
| 28 | Gebläse | 67 | Strecke |
| 29 | Obersieb | 68 | Strecke |
| 30 | Untersieb | 69 | Ausgangsbereich |
| 70 | Endbereich | S2 | Körnerstromsignal |
| | | S3 | Körnerstromsignal |
| A | Querabscheidung | S4 | Körnerstromsignal |
| D | Gutschichtdicke | S5 | Körnerstromsignal |
| G | Gutverteilung | S6 | Körnerstromsignal |
| H | Neigungssignal | S7 | Körnerstromsignal |
| L | Längsschwingung | S8 | Körnerstromsignal |
| M | Viertes Steuerbefehlssignal | J1 | Erstes Steuerbefehlssignal |
| q | Abscheidekurve | J2 | Zweites Steuerbefehlssignal |
| Q | Querschwingung | J3 | Drittes Steuerbefehlssignal |
| ES | Erntegutstromsignal | R1 | Steuersignal |
| FR | Fahrtrichtung | R2 | Steuersignal |
| KR | Kornreinheit | R3 | Steuersignal |
| S1 | Körnerstromsignal | R4 | Steuersignal |

## Patentansprüche

1. Verfahren zur Abscheidung eines Erntegutstroms (8) auf wenigstens einem Förder- und Reinigungsorgan (29, 30), insbesondere einem Obersieb (29), eines Mähdreschers (1), wobei das Förder- und Reinigungsorgan (29, 30) zu einer Längsschwingung (L) und einer Querschwingung (Q) angeregt wird, wobei eine Regelung der Querschwingung (Q) in Abhängigkeit zumindest eines Zustands erfolgt, wobei zumindest ein Zustand zur Regelung der Querschwingung (Q) die Neigung des Mähdreschers (1) ist,
***dadurch gekennzeichnet, dass***
zumindest ein weiterer Zustand zur Regelung der Querschwingung (Q) die Kornreinheit (KR), insbesondere die Kornreinheit (KR) eines Haupterntegutstroms (11), ist,
wobei die Querschwingung (Q) in Abhängigkeit von der Neigung des Mähdreschers (1) vorgeregelt und in Abhängigkeit von der Kornreinheit (KR) feingeregelt wird.

2. Verfahren zur Abscheidung eines Erntegutstroms (8) nach Anspruch 1, **dadurch gekennzeichnet, dass** die Kornreinheit (KR) durch einen oder mehrere erste Sensoren (51), vorzugsweise optische Sensoren, ermittelt wird.

3. Verfahren zur Abscheidung eines Erntegutstroms (8) nach einem der Ansprüche 1 bis 2, **dadurch gekennzeichnet, dass** das Förder- und Reinigungsorgan (29, 30), insbesondere das Obersieb (29), sowohl bei einem Arbeitsvorgang in der Ebene sowie am Hang mit einer aktiven Querschwingung (Q) beaufschlagt wird, wobei mittels der aktiven Querschwingung (Q) die zurückgelegte Strecke (67, 68) des Ernteguts (6) auf dem Förder- und Reinigungsorgan (29, 30) aktiv verlängert wird.

4. Verfahren zur Abscheidung eines Erntegutstroms (8) nach einem der Ansprüche 1 bis 3, **dadurch gekennzeichnet, dass** zumindest ein weiterer Zustand zur Regelung der Querschwingung (Q) eine Querabscheidung (A), insbesondere eine Querabscheidung (A) an einem oder an mehreren Sieben (29, 30) des Förder- und Reinigungsorgans (29, 30), ist.

5. Verfahren zur Abscheidung eines Erntegutstroms (8) nach Anspruch 4, **dadurch gekennzeichnet, dass** die Querabscheidung (A) am Abgang an einem oder an mehreren Sieben (29, 30) des Förder- und Reinigungsorgans (29, 30) durch eine oder mehrere Körnerstrommesseinrichtung (39, 41, 43) bestimmt wird.

6. Verfahren zur Abscheidung eines Erntegutstroms (8) nach einem der Ansprüche 1 bis 5, **dadurch gekennzeichnet, dass** der Mähdrescher (1) als Axialrotormaschine ausgebildet ist, wobei die Axialrotormaschine zumindest einen Axialrotor (4) und diesen zumindest teilweise umschließende Lamellen (27) aufweist, wobei ein weiterer Zustand zur Regelung der Querschwingung (Q) eine Anstellung der Lamellen (27) ist, wobei die Anstellung der Lamellen (27) durch die Regelung in Abhängigkeit wenigstens eines der Zustände verändert wird.

7. Verfahren zur Abscheidung eines Erntegutstroms (8) nach einem der Ansprüche 1 bis 6, **dadurch gekennzeichnet, dass** die Regelung der Querschwingung (Q) automatisch erfolgt.

8. Verfahren zur Abscheidung eines Erntegutstroms (8) nach einem der Ansprüche 1 bis 7, **dadurch gekennzeichnet, dass** ein weiterer Zustand zur Regelung der Querschwingung (Q) der Durchsatz des Erntegutstroms (8) ist.

9. Mähdrescher (1) umfassend eine Vorrichtung zur Abscheidung eines Erntegutstroms (8) auf wenigstens einem Förder- und Reinigungsorgan (29, 30), insbesondere einem Obersieb (29), des Mähdreschers (1), wobei der Mähdrescher (1) zur Anregung des Förder- und Reinigungsorgans (29, 30) zu einer Längsschwingung (L) und einer Querschwingung (Q) eingerichtet ist, wobei eine Steuereinheit (50) zur Regelung der Querschwingung (Q) in Abhängigkeit zumindest eines Zustands eingerichtet ist, wobei zumindest ein Zustand zur Regelung der Querschwingung (Q) die Neigung des Mähdreschers (1) ist,
***dadurch gekennzeichnet, dass***
der Mähdrescher (1) einen oder mehrere erste Sensoren (51) zur Ermittlung der Kornreinheit (KR) und die Steuereinheit (50) zum Steuern der Querschwingung (Q) umfasst und die Steuerung eingerichtet ist die Querschwingung (Q) in Abhängigkeit des zumindest einen Zustands zu regeln,
wobei der zumindest eine Zustand zur Steuerung der Querschwingung (Q) die Neigung des Mähdreschers (1) und zumindest ein weiterer Zustand die Kornreinheit (KR) ist,
wobei die Steuereinheit (50) zum Voreinstellen in Abhängigkeit von der Neigung des Mähdreschers (1) auf einen Querschwingungs-Sollwert (60) und anschließend in Abhängigkeit von dem zumindest einen weiteren Zustand zum Generieren eines Steuerbefehlssignal (J3) und zum Einstellen der Querschwingung (Q) des Förder- und Reinigungsorgans (29, 30) mit dem Steuerbefehlssignal (J3) eingerichtet ist, so dass die Kornreinheit (KR) innerhalb eines definierten Toleranzbereichs liegt.

10. Mähdrescher (1) zur Abscheidung eines Erntegutstroms (8) nach Anspruch 9,
**dadurch gekennzeichnet, dass** die ersten Sensoren (51) als optische Sensoren zur Aufnahme von Bildserien eines durchlaufenden Erntegutstroms (8) ausgebildet sind, wobei vorzugsweise die optischen Sensoren im Kornelevator (45) angeordnet sind.

11. Mähdrescher (1) zur Abscheidung eines Erntegutstroms (8) nach einem der Ansprüche 9 oder 10, **dadurch gekennzeichnet, dass** der Mähdrescher (1) wenigstens eine Körnerstrommesseinrichtung (39, 41, 43) zur Bestimmung der Querabscheidung (A) umfasst und
zumindest ein weiterer Zustand zur Steuerung der Querschwingung (Q) die Querabscheidung (A) ist.

12. Mähdrescher (1) zur Abscheidung eines Erntegutstroms (8) nach einem der Ansprüche 9 bis 11, **dadurch gekennzeichnet, dass** der Mähdrescher (1) als Axialrotormaschine ausgebildet ist, wobei die Axialrotormaschine zumindest einen Axialrotor (4) und diesen zumindest teilweise umschließende Lamellen (27) aufweist und zumindest ein weiterer Zustand zur Steuerung der Querschwingung (Q) eine Anstellung der Lamellen (27) ist.

13. Mähdrescher (1) zur Abscheidung eines Erntegutstroms (8) nach einem der Ansprüche 9 bis 12, **dadurch gekennzeichnet, dass** die Steuereinheit (50) zum Steuern der Anstellung der Lamellen (27) eingerichtet ist und die Steuerung eingerichtet ist die Anstellung der Lamellen (27) in Abhängigkeit zumindest eines der Zustände zu verändern.

14. Mähdrescher (1) zur Abscheidung eines Erntegutstroms (8) nach einem der Ansprüche 9 bis 13, **dadurch gekennzeichnet, dass** der Mähdrescher (1) eine Durchsatzmesseinrichtung (12), insbesondere eine in einem Schrägförderer (9) des Mähdreschers (1) angeordnete Schichthöhenwalze (13), zur Ermittlung des Durchsatzes des Erntegutstroms (8) aufweist und
zumindest ein weiterer Zustand zur Steuerung der Querschwingung (Q) der Durchsatz des Erntegutstroms (8) ist.

## Claims

1. A method for separating a flow of harvested material (8) on at least one conveying and cleaning means (29, 30), in particular a top sieve (29), of a combine harvester (1), wherein the conveying and cleaning means (29, 30) is stimulated into a longitudinal oscillation (L) and a transverse oscillation (Q), wherein a control of the transverse oscillation (Q) is carried out as a function of at least one state, wherein at least one state for controlling the transverse oscillation (Q) is the inclination of the combine harvester (1),
***characterized in that***
at least one further state for controlling the transverse oscillation (Q) is the grain purity (KR), in particular the grain purity (KR) of a main flow of harvested material (11),
wherein the transverse oscillation (Q) is preset as a function of the inclination of the combine harvester (1) and fine-tuned as a function of the grain purity (KR).

2. The method for separating a flow of harvested material (8) according to claim 1, **characterized in that** the grain purity (KR) is determined by one or more first sensors (51), preferably optical sensors.

3. The method for separating a flow of harvested material (8) according to claim 1 or claim 2, **characterized in that** in the case of a working procedure on the flat as well as on a slope, the conveying and cleaning means (29, 30), in particular the top sieve (29), are acted upon by an active transverse oscillation (Q), wherein by means of the active transverse oscillation (Q), the path (67, 68) travelled by the harvested material (6) on the conveying and cleaning means (29, 30) is actively extended.

4. The method for separating a flow of harvested material (8) according to one of claims 1 to 3, **characterized in that** at least one further state for controlling the transverse oscillation (Q) is a transverse separation (A), in particular a transverse separation (A) at one or at more sieves (29, 30) of the conveying and cleaning means (29, 30).

5. The method for separating a flow of harvested material (8) according to claim 4, **characterized in that** the transverse separation (A) at the discharge for one or more sieves (29, 30) of the conveying and cleaning means (29, 30) is determined by one or more grain flow measuring devices (39, 41, 43).

6. The method for separating a flow of harvested material (8) according to one of claims 1 to 5, **characterized in that** the combine harvester (1) is configured as an axial flow combine, wherein the axial flow combine has at least one axial rotor (4) which is at least partially surrounded by slats (27), wherein a further state for controlling the transverse oscillation (Q) is a position of the slats (27), wherein the position of the slats (27) is varied by the control as a function of at least one of the states.

7. The method for separating a flow of harvested material (8) according to one of claims 1 to 6, **characterized in that** the control of the transverse oscillation (Q) is carried out automatically.

8. The method for separating a flow of harvested material (8) according to one of claims 1 to 7, **characterized in that** a further state for controlling the transverse oscillation (Q) is the throughput of the flow of harvested material (8).

9. A combine harvester (1) comprising a device for separating a flow of harvested material (8) on at least one conveying and cleaning means (29, 30), in particular a top sieve (29), of the combine harvester (1), wherein the combine harvester (1) is configured to stimulate the conveying and cleaning means (29, 30) into a longitudinal oscillation (L) and a transverse oscillation (Q), wherein a control unit (50) is configured to control the transverse oscillation (Q) as a function of at least one state, wherein at least one state for controlling the transverse oscillation (Q) is the inclination of the combine harvester (1),
***characterized in that***
the combine harvester (1) comprises one or more first sensors (51) for determining the grain purity (KR) and the control unit (50) for controlling the transverse oscillation (Q) and the controller is configured to control the transverse oscillation (Q), as a function of the at least one state,
wherein the at least one state for controlling the transverse oscillation (Q) is the inclination of the combine harvester (1) and at least one further state is the grain purity (KR), wherein the control unit (50) is configured to a nominal value (60) for the transverse oscillation as a function of the inclination of the combine harvester (1) and then to generate a control command signal (J3) as a function of the at least one further state and to adjust the transverse oscillation (Q) of the conveying and cleaning means (29, 30) with the control command signal (J3) so that the grain purity (KR) lies within a defined range of tolerances.

10. The combine harvester (1) for separating a flow of harvested material (8) according to claim 9, **characterized in that** the first sensors (51) are configured as optical sensors for recording series of images of a passing flow of harvested material (8), wherein preferably, the optical sensors are disposed in the grain elevator (45).

11. The combine harvester (1) for separating a flow of harvested material (8) according to claim 9 or claim 10, **characterized in that** the combine harvester (1) comprises at least one grain flow measuring device (39, 41, 43) for determining the transverse separation (A) and at least one further state for controlling the transverse oscillation (Q) is the transverse separation (A).

12. The combine harvester (1) for separating a flow of harvested material (8) according to one of claims 9 to 11, **characterized in that** the combine harvester (1) is configured as an axial flow combine, wherein the axial flow combine has at least one axial rotor (4) which is at least partially surrounded by slats (27) and at least one further state for controlling the transverse oscillation (Q) is a position of the slats (27).

13. The combine harvester (1) for separating a flow of harvested material (8) according to one of claims 9 to 12, **characterized in that** the control unit (50) is configured for controlling the position of the slats (27) and the controller is configured to vary the position of the slats (27) as a function of at least one of the states.

14. The combine harvester (1) for separating a flow of harvested material (8) according to one of claims 9 to 13, **characterized in that** the combine harvester (1) has a throughput measuring device (12), in particular a layer depth roller (13) disposed in an inclined conveyor (9) of the combine harvester (1), in order to determine the throughput of the flow of harvested material (8) and at least one further state for controlling the transverse oscillation (Q) is the throughput of the flow of harvested material (8).

## Revendications

1. Procédé pour séparer un flux de produit récolté (8) sur au moins un organe de convoyage et de nettoyage (29, 30), en particulier sur une grille supérieure (29), d'une moissonneuse-batteuse (1), l'organe de convoyage et de nettoyage (29, 30) étant sollicité en une oscillation longitudinale (L) et en une oscillation transversale (Q), une régulation de l'oscillation transversale (Q) s'effectuant en fonction au moins d'un état, au moins un état pour la régulation de l'oscillation transversale (Q) étant l'inclinaison de la moissonneuse-batteuse (1),
***caractérisé en ce que***
au moins un autre état pour la régulation de l'oscillation transversale (Q) est la propreté du grain (KR), en particulier la propreté du grain (KR) d'un flux de récolte principal (11),
l'oscillation transversale (Q) étant préréglée en fonction de l'inclinaison de la moissonneuse-batteuse et réglée finement en fonction de la propreté du grain (KR).

2. Procédé de séparation d'un flux de produit récolté (8) selon la revendication 1, **caractérisé en ce que** la propreté du grain (KR) est déterminée par l'intermédiaire d'un ou plusieurs premiers capteurs (51), préférentiellement capteurs optiques.

3. Procédé de séparation d'un flux de produit récolté (8) selon une des revendications 1 à 2, **caractérisé en ce que** l'organe de convoyage et de nettoyage (29, 30), en particulier la grille supérieure (29), est sollicité avec une oscillation transversale active (Q) aussi bien lors d'une opération en plaine qu'en côte, le trajet parcouru (67, 68) du produit récolté (6) sur l'organe de convoyage et de nettoyage (29, 30) étant allongé activement au moyen de l'oscillation transversale active (Q).

4. Procédé de séparation d'un flux de produit récolté (8) selon une des revendications 1 à 3, **caractérisé en ce qu'**au moins un autre état pour la régulation de l'oscillation transversale (Q) est une séparation transversale (A), en particulier une séparation transversale (A) au niveau d'une ou de plusieurs grilles (29, 30) de l'organe de convoyage et de nettoyage (29, 30).

5. Procédé de séparation d'un flux de produit récolté (8) selon la revendication 4, **caractérisé en ce que** la séparation transversale (A) à la sortie au niveau d'une ou de plusieurs grilles (29, 30) de l'organe de convoyage et de nettoyage (29, 30) est déterminée par l'intermédiaire d'un ou plusieurs équipements de mesure de flux de grains (39, 41, 43).

6. Procédé de séparation d'un flux de produit récolté (8) selon une des revendications 1 à 5, **caractérisé en ce que** la moissonneuse-batteuse (1) est conformée en machine à rotor axial, la machine à rotor axial comportant au moins un rotor axial (4) et des lamelles (27) entourant celui-ci au moins en partie, un autre état pour la régulation de l'oscillation transversale (Q) étant une inclinaison des lamelles (27), l'inclinaison des lamelles (27) étant modifiée par l'intermédiaire de la régulation en fonction au moins d'un des états.

7. Procédé de séparation d'un flux de produit récolté (8) selon une des revendications 1 à 6, **caractérisé en ce que** la régulation de l'oscillation transversale (Q) s'effectue automatiquement.

8. Procédé de séparation d'un flux de produit récolté (8) selon une des revendications 1 à 7, **caractérisé en ce qu'**un autre état pour la régulation de l'oscillation transversale (Q) est le débit du flux de produit récolté (8).

9. Moissonneuse-batteuse (1) incluant un dispositif de séparation d'un flux de produit récolté (8) sur au moins un organe de convoyage et de nettoyage (29, 30), en particulier sur une grille supérieure (29) de la moissonneuse-batteuse (1), la moissonneuse-batteuse (1) étant agencée pour solliciter l'organe de convoyage et de nettoyage (29, 30) en une oscillation longitudinale (L) et en une oscillation transversale (Q), une unité de commande (50) étant agencée pour réguler l'oscillation transversale (Q) en fonction au moins d'un état, au moins un état pour la régulation de l'oscillation transversale (Q) étant l'inclinaison de la moissonneuse-batteuse (1),
**caractérisée en ce que**
la moissonneuse-batteuse (1) inclut un ou plusieurs premiers capteurs (51) pour déterminer la propreté du grain (KR) et l'unité de commande (50) pour commander l'oscillation transversale (Q), et la commande étant agencée pour réguler l'oscillation transversale (Q) en fonction du au moins un état,
le au moins un état pour la commande de l'oscillation transversale (Q) étant l'inclinaison de la moissonneuse-batteuse (1) et au moins un autre état la propreté du grain (KR), l'unité de commande (50) étant agencée pour le préréglage en fonction de l'inclinaison de la moissonneuse-batteuse (1) à une valeur de consigne d'oscillation transversale (60) et ensuite en fonction du au moins un autre état pour générer un signal d'instruction de commande (J3) et pour régler l'oscillation transversale (Q) de l'organe de convoyage et de nettoyage (29, 30) avec le signal d'instruction de commande (J3), de façon que la propreté du grain (KR) se trouve à l'intérieur d'une plage de tolérance définie.

10. Moissonneuse-batteuse (1) pour séparer un flux de produit récolté (8) selon la revendication 9, **caractérisée en ce que** les premiers capteurs (51) sont conformés en capteurs optiques afin de prendre des séries d'images d'un flux de récolte passant (8), préférentiellement les capteurs optiques étant disposés dans l'élévateur de grains (45).

11. Moissonneuse-batteuse (1) pour séparer un flux de produit récolté (8) selon une des revendications 9 ou 10, **caractérisée en ce que** la moissonneuse-batteuse (1) inclut au moins un équipement de mesure de flux de grains (39, 41, 43) pour déterminer la séparation transversale (A) et
au moins un autre état pour commander l'oscillation transversale (Q) est la séparation transversale (A).

12. Moissonneuse-batteuse (1) pour séparer un flux de produit récolté (8) selon une des revendications 9 à 11, **caractérisée en ce que** la moissonneuse-batteuse (1) est conformée en machine à rotor axial, la machine à rotor axial comportant au moins un rotor axial (4) et des lamelles (27) entoura celui-ci au moins en partie, et au moins un autre état pour la commande de l'oscillation transversale (Q) étant une inclinaison des lamelles (27).

13. Moissonneuse-batteuse (1) pour séparer un flux de produit récolté (8) selon une des revendications 9 à 12, **caractérisée en ce que** l'unité de commande (50) est agencée pour commander l'inclinaison des lamelles (27), et la commande est agencée pour modifier l'inclinaison des lamelles (27) en fonction au moins d'un des états.

14. Moissonneuse-batteuse (1) pour séparer un flux de produit récolté (8) selon une des revendications 9, à 13, **caractérisée en ce que** la moissonneuse-batteuse (1) comporte un équipement de mesure de débit (12), en particulier un rouleau de hauteur de couche (13), disposé dans un convoyeur incliné (9) de la moissonneuse-batteuse (1) pour déterminer le débit du flux de produit récolté (8) et
au moins un autre état pour la commande de l'oscillation transversale (Q) est le débit du flux de produit récolté (8).
